# EUROPEAN PATENT SPECIFICATION

(11) **EP 1 092 654 B1**
(45) Date of publication and mention of the grant of the patent: **17.03.2004**
(21) Application number: 00122456.7
(22) Date of filing: 13.10.2000
(51) Int. Cl.: B65G 1/04

(54) **Vertical store**
Senkrechtes Lager
Entrepou vertical

(30) Priority: 15.10.1999 IT TO990901
(43) Date of publication of application: 18.04.2001
(73) Proprietor: BERTELLO S.p.A., I-12011 Borgo San Dalmazzo (IT)
(72) Inventor: Pontini, Massimo, 10090 San Raffaele Cimena (IT); Franco, Renato, 12010 Cervasca (IT); Ghibaudo, Giuseppe, 12010 Roasca (IT)
(74) Representative: Eccetto, Mauro

(56) References cited:
- US-A- 4 361 411

## Description

The present invention relates to a vertical store, and in particular to an automated vertical store of the type comprising a shelf structure having a number of horizontal shelves arranged at different heights and supporting respective drawers for the material for storage.

To inspect the drawers, known stores of the above type normally comprise a supporting surface and a conveyor for moving the drawers horizontally to and from the supporting surface.

Said conveyor is a chain type normally comprising two lateral chains having respective pairs of projecting teeth for engaging seats formed in the drawers and for both pushing and pulling the drawers.

Though widely used, vertical stores of the above type (e.g. see document US-A-4 361 411) are fairly unsatisfactory.

It is an object of the present invention to provide a vertical store designed for optimizing the time taken to move the drawers for inspection.

According to the present invention, there is provided an automated vertical store comprising a lift device, in turn comprising a supporting surface for supporting at least one container, and first conveying means cooperating, in use, with said container to move the container, parallel to said supporting surface, to and from the supporting surface; an inspection station for inspecting said container and comprising second conveying means; and a pre-inspection station located in an intermediate position between said inspection station and said lift device; characterized by also comprising supporting means for supporting said container and permanently connected to said second conveying means so as to move between a pre-inspection position, wherein said supporting means are located at said pre-inspection station to transfer said container to and from said supporting surface, and an inspection position wherein said supporting means are located at said inspection station to inspect said container.

A non-limiting embodiment of the invention will be described by way of example with reference to the accompanying drawings, in which:
Figure 1 shows a side view, with parts removed for clarity, of a preferred embodiment of the vertical store according to the present invention in the course of a first step in the transfer of a stored drawer for inspection;
Figures 2 and 3 are similar to Figure 1 and show the Figure 1 store in the course of a second and third step respectively in the transfer of the drawer for inspection.

Number 1 in the accompanying drawings indicates as a whole an automated vertical store comprising a known shelf structure 2 (shown partly) having a number of horizontal shelves (not shown) arranged at different heights and for supporting respective drawers for the material for storage.

Each drawer is removable from the relative shelf by means of a known powered lift device 4 forming part of store 1, located alongside shelf structure 2, and comprising a vertically movable platform 6, and an actuating member (not shown) for lifting and lowering platform 6 into position alongside the shelves.

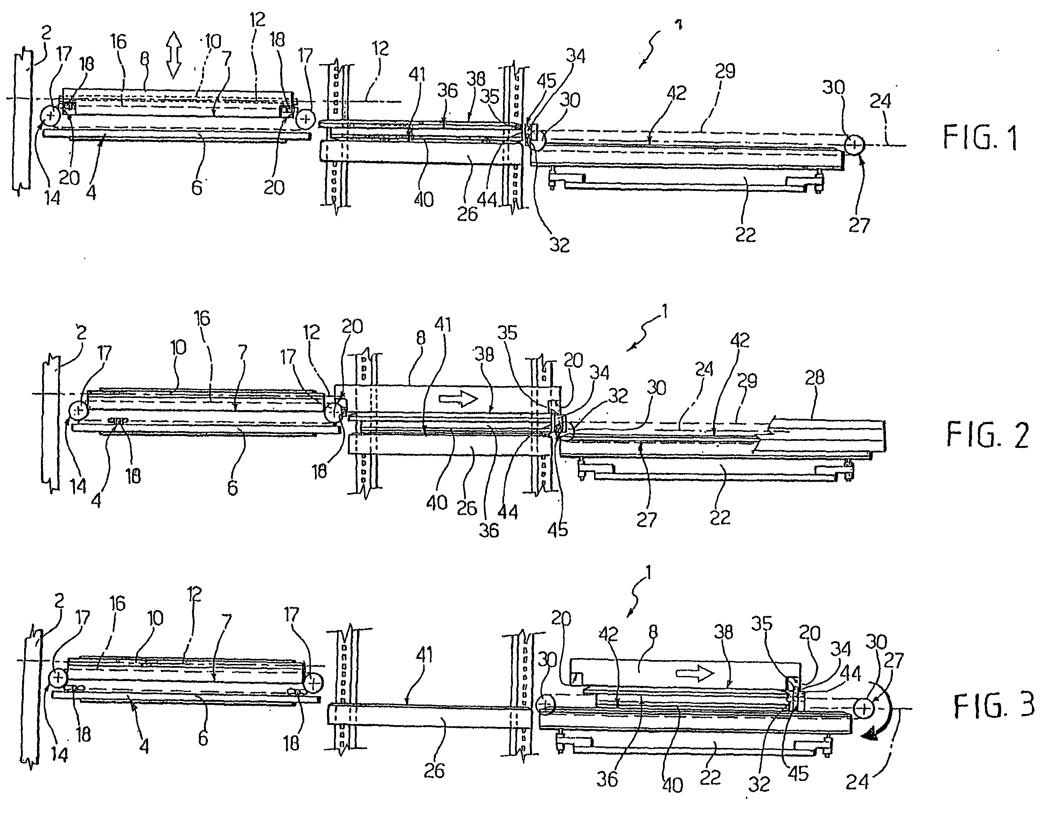

Platform 6 is defined by a horizontal top supporting surface 7 for supporting a container for inspection defined by a drawer 8, and comprises an elongated guide 10 extending in a horizontal transfer direction 12 of drawer 8, and cooperating in sliding manner with drawer 8 (Figure 1).

Platform 6 also comprises two powered lateral chain conveyors 14 (shown schematically) for moving drawer 8 back and forth in direction 12 to and from surface 7, and in turn comprising respective chains 16 (only one shown by the dot-and-dash line in the drawings) extending facing and parallel to each other along respective elongated annular paths in direction 12.

Each chain 16 is looped about a pair of pulleys 17, and carries a pair of projecting horizontal pins 18, which are spaced apart along relative chain 16, face and extend towards the pins 18 on the other chain 16, and engage relative lateral seats 20 formed in drawer 8 to engage and both pull and push drawer 8. Drawer 8 comprises four seats 20 - one for each bottom corner-defined by respective upside-down-U-shaped walls and having respective access openings formed at the bottom and laterally in a direction perpendicular to direction 12.

To inspect drawer 8, store 1 comprises an inspection station 22 located on the opposite side of lift device 4 to shelf structure 2 in a horizontal direction 24 parallel to direction 12; and a pre-inspection station 26 located in an intermediate position between station 22 and lift device 4.

Station 22 comprises two powered lateral chain conveyors 27 (shown schematically); and two vertical shutter-type lateral safety guards 28 (only one shown partly in Figure 2) located on opposite sides of conveyors 27 and parallel to direction 24 to protect conveyors 27, and which are removable to inspect and repair conveyors 27.

Conveyors 27 comprise respective chains 29 (only one shown by the dot-and-dash line in the drawings) looped about respective pulleys 30 and extending facing and parallel to each other along respective elongated annular paths in direction 24. Each chain 29 has a relative horizontal projecting pin 32 facing and extending towards the pin 32 of the other chain 29; and a tooth 34 perpendicular to relative pin 32 and having a first end hinged to relative pin 32, and a free opposite second end 35.

Pins 32 are connected stably to a slide 36 supporting drawer 8, so as to move slide 36, in direction 24, between a pre-inspection position in which slide 36 is located at station 26 to transfer drawer 8 to and from surface 7 and to pre-inspect the contents of drawer 8, and an inspection position in which slide 36 is located at station 22 to inspect drawer 8.

Slide 36 is defined at the top by a horizontal surface 38 for supporting drawer 8, and comprises a bottom portion 40 which runs along flat coplanar top surfaces 41 and 42 forming part of stations 26 and 22 respectively, and an end portion 44 located at the opposite end to lift device 4 and facing station 22.

End portion 44 has two vertical slots 45 (only one shown in the drawings) formed on opposite sides and each engaged vertically and stably in sliding manner by a relative pin 32 and by a,relative tooth 34 to move slide 36, and therefore drawer 8, between the inspection and pre-inspection positions.

In actual use, once lift device 4 is set to the height of the shelf of drawer 8 to be inspected, chains 16 move clockwise in Figure 1 to move pins 18, in respective rest positions along the return branches of chains 16, so that two facing pins 18 engage seats 20 to engage and pull drawer 8 onto surface 7.

Once the platform is lowered to a height at which surfaces 7 and 38 are substantially coplanar (Figure 1), chains 16 again move clockwise in Figure 1, so that another two facing pins 18 push drawer 8 in direction 12 towards surface 38. When the two push pins 18 get to the end of the delivery branch of chains 16 (Figure 2), drawer 8 is positioned entirely on slide 36, and chains 16 move further to move the push pins 18 past pulleys 17 and into respective rest positions (Figure 3) along the return branches of chains 16. As soon as pins 18 get to the end of the delivery branch of chains 16, simultaneously with the further movement of chains 16, conveyors 27 are activated to move slide 36 from the pre-inspection position to the inspection position (Figures 2 and 3).

As shown in Figure 2, when drawer 8 is in the pre-inspection position, pins 32 are located at the bottom ends of slots 45, in intermediate positions between the delivery and return branches of relative chains 29, whereas teeth 34 engage relative slots 45 completely. As soon as chains 29 move clockwise in Figure 3, pins 32 begin pulling slide 36 in direction 24 towards station 22, initially travel along an arc of the annular path of chains 29 about relative pulleys 30, and slide vertically upwards into slots 45. Along the same portion of the travel of chains 29, teeth 34 also slide upwards into slots 45 so that ends 35 project from surface 38 and engage seats 20 to define a reference position of drawer 8 on surface 38. As shown in Figure 3, pins 32 travel along the delivery branch of chains 29 and pull slide 36 onto surface 42 into the drawer 8 inspection position.

To return drawer 8 to shelf structure 2, chains 29 and 16 move, one after the other, anticlockwise in the accompanying drawings, so that slide 36 is first moved into station 26, and drawer 8 is then engaged by pins 18, which, leaving the relative rest positions, engage seats 20 to pull drawer 8 onto surface 7.

As compared with known solutions, vertical store 1 as described therefore provides for faster transfer of drawer 8 to and from station 26, by pins 32 being permanently connected to slide 36 and therefore pulling slide 36 and drawer 8 as soon as chains 29 start moving.

That is, unlike known solutions, no time is wasted during the travel of chains 29 to perform a no-load movement of pins 32 from the rest positions to the drawer 8 engagement positions, on account of pins 32 permanently engaging slots 45, thus optimizing transfer of the drawers to and from station 22, and so reducing the running cost of store 1.

Moreover, slots 45 enable pins 32 to travel vertically and therefore along an arc about pulleys 30 along an end portion of the path of chains 29, while teeth 34 simply define safety retaining members for retaining drawer 8.

The presence of slide 36 between surface 41 and drawer 8 also enables station 22 to be provided with lateral guards 28 to provide safer working conditions for the operators of store 1.

Clearly, changes may be made to store 1 as described herein without, however, departing from the scope of the present invention.

In particular, conveyors 27 may be connected differently to slide 36, e.g. with no teeth 34 provided; surfaces 40 and 41 may define respective guides in direction 24; and/or directions 12 and 24 need not be parallel.

## Claims

1. An automated vertical store (1) for supporting at least one container (8), and first conveying means (14) cooperating, in use, with said container (8) to move the container (8), parallel to said supporting surface (7), to and from the supporting surface (7); and an inspection station (22) for inspecting said container (8); **characterized by** also comprising a lift device (4), in turn comprising a supporting surface (7) second conveying means (27), and a pre-inspection station (26) located in an intermediate position between said inspection station (22) and said lift device (4); said automated vertical store also comprises supporting means (36) for supporting said container (8) and permanently connected to said second conveying means (27) so as to move between a pre-inspection position, wherein said supporting means (36) are located at said pre-inspection station (26) to transfer said container (8) to and from said supporting surface (7), and an inspection position wherein said supporting means (36) are located at said inspection station (22) to inspect said container (8).

2. A vertical store as claimed in Claim 1, **characterized in that** said supporting means (36) comprise a slide (36) movable between said pre-inspection position and said inspection position; connecting means (32, 45) being provided to permanently connect said second conveying means (27) and said slide (36).

3. A vertical store as claimed in Claim 2, **characterized in that** said connecting means (32, 45) comprise at least one draw pin (32) carried by said second conveying means; and a relative seat (45) formed in said slide and engaged positively by said draw pin (32).

4. A vertical store as claimed in Claim 3, **characterized in that** said seat (45) is defined by a slot (45) formed in an end portion (44) of said slide (36), perpendicular to a traveling direction (24) of the slide (36), and engaged in sliding manner by said draw pin (32).

5. A vertical store as claimed in any one of Claims 2 to 4, **characterized in that** said slide (36) is defined by a supporting surface (38) for supporting said container (8); said slide (36) being engaged by a reference tooth (34), which is carried by said second conveying means (27), is crosswise to said supporting surface (38), and comprises a first end (35) which extends beyond the supporting surface (38) during the movements of said slide (36), so as to engage a seat (20) formed in said container (8).

6. A vertical store as claimed in Claims 4 and 5, **characterized in that** said reference tooth (34) engages said slot (45) in sliding manner, and has a second end opposite said first end (35) and hinged to said draw pin (32).

7. A vertical store as claimed in any one of the foregoing Claims, **characterized in that** said inspection station (22) comprises at least one safety guard (28) for protecting said second conveying means (27).

## Patentansprüche

1. Automatisiertes Vertikal-Lager (1) zum Tragen zumindest eines Behälters (8) und erste Beförderungsmittel (14), die beim Betrieb mit dem Behälter (8) zusammenwirken, um den Behälter (8) parallel zur Auflagefläche (7) auf die Auflagefläche (7) und von dieser zu bewegen, und eine Kontrollstation (22) zum Kontrollieren des Behälters (8), **gekennzeichnet durch** ferner aufweisend eine Hubvorrichtung (4), die ihrerseits eine Auflagefläche (7) aufweist, zweite Beförderungsmittel (27) und eine Vorkontrollstation (26), die in einer Zwischenposition zwischen der Kontrollstation (22) und der Hubvorrichtung (4) angeordnet ist, wobei das automatisierte Vertikal-Lager ferner aufweist: Tragmittel (36) zum Tragen des Behälters (8), die permanent mit dem zweiten Beförderungsmittel (27) gekuppelt sind, um sich zwischen einer Vorkontrollposition, wobei die Tragmittel (36) an der Vorkontrollstation (26) angeordnet sind, um den Behälter (8) auf die Auflagefläche (7) und von dieser zu bewegen, und einer Kontrollposition zu bewegen, wobei die Tragmittel (36) an der Kontrollstation (22) angeordnet sind, um den Behälter (8) zu kontrollieren.

2. Vertikal-Lager gemäß Anspruch 1, **dadurch gekennzeichnet, dass** die Tragmittel (36) einen Schlitten (36) aufweisen, der zwischen der Vorkontrollposition und der Kontrollposition bewegbar ist, wobei Verbindungsmittel (32, 45) vorgesehen sind, um die zweiten Beförderungsmittel (27) und den Schlitten (36) permanent zu kuppeln.

3. Vertikal-Lager gemäß Anspruch 2, **dadurch gekennzeichnet, dass** die Verbindungsmittel (32, 45) zumindest einen Zugstift (32), der von den zweiten Beförderungsmitteln getragen wird, und einen jeweiligen Sitz (45) aufweisen, der im Schlitten ausgebildet ist und in dem der Zugstift (32) formschlüssig in Eingriff ist.

4. Vertikal-Lager gemäß Anspruch 3, **dadurch gekennzeichnet, dass** der Sitz (45) von einem Schlitz (45) definiert ist, der in einem Endabschnitt (44) des Schlittens (36) und senkrecht zu einer Bewegungsrichtung (24) des Schlittens (36) ausgebildet ist und in dem der Zugstift (32) in Gleiteingriff ist.

5. Vertikal-Lager gemäß einem der Ansprüche 2 bis 4, **dadurch gekennzeichnet, dass** der Schlitten (36) von einer Auflagefläche (38) zum Abstützen des Behälters (8) begrenzt ist, wobei der Schlitten (36) mit einem Referenzzahn (34) in Eingriff ist, welcher vom zweiten Beförderungsmittel (27) getragen wird, quer zur Auflagefläche (38) ist und ein erstes Ende (35) aufweist, welches sich während der Bewegungen des Schlittens (36) über die Auflagefläche (38) hinaus erstreckt, um in einen Sitz (20) einzugreifen, der im Behälter (8) ausgebildet ist.

6. Vertikal-Lager gemäß den Ansprüchen 4 und 5, **dadurch gekennzeichnet, dass** der Referenzzahn (34) im Schlitz (45) in Gleiteingriff ist und ein zweites Ende aufweist, das dem ersten Ende (35) gegenüberliegt und das schwenkbar mit dem Zugstift (32) verbunden ist.

7. Vertikal-Lager gemäß einem der vorhergehenden Ansprüche, **dadurch gekennzeichnet, dass** die Kontrollstation (22) mindestens eine Schutzabdeckung (28) zum Abschirmen des zweiten Beförderungsmittels (27) aufweist.

## Revendications

1. Un entrepôt vertical automatisé (1) pour supporter au moins un container (8), et des premiers moyens de transport (14) coopérant, en fonctionnement, avec ledit container (8) pour déplacer ce container (8) parallèlement à ladite surface support (7), vers et à partir de ladite surface support (7); et une station d'inspection (22) pour inspecter ledit container (8); **caractérisé en ce qu'**il comprend également un dispositif élévateur (4) comprenant, à son tour, une surface support (7); des seconds moyens de transport (27) et une station de pré-inspection (26) située dans une position intermédiaire entre ladite station d'inspection (22) et ledit dispositif élévateur (4); ledit entrepôt vertical automatisé comprend également des moyens de support (36) pour supporter ledit container (8), reliés en continu auxdits seconds moyens de transport (27) de façon à ce que celui-ci puisse se déplacer entre une position de pré-inspection dans laquelle lesdits moyens de support (36) sont placés sur la station de pré-inspection (36) pour transférer ledit container (8) vers et à partir de ladite surface support (7), et une position d'inspection dans laquelle lesdits moyens de support (36) sont placés à la station d'inspection (22), pour inspecter ledit container (8).

2. Un entrepôt vertical, tel que revendiqué dans la revendication 1, **caractérisé en ce que** lesdits moyens de support (36) comprennent une glissière (36) mobile entre ladite position de pré-inspection et ladite position d'inspection; des moyens de liaison (32, 45) étant installés pour relier en continu lesdits seconds moyens de transport (27) et ladite glissière (36).

3. Un entrepôt vertical tel que revendiqué dans la revendication 2, **caractérisé en ce que** lesdits moyens de liaison (32, 45) comprennent au moins une goupille de traction (32) entraînée par lesdits seconds moyens de transport; et un siège correspondant (45) formé dans ladite glissière dans lequel s'engage ladite goupille de traction (32).

4. Un entrepôt vertical tel que revendiqué dans la revendication 3, **caractérisé en ce que** ledit siège (45) est constitué par une rainure (45) formée dans une partie terminale (44) de ladite glissière (36), perpendiculaire à une direction (24) du déplacement de la glissière (36), dans laquelle s'engage, d'une façon coulissante, ladite goupille de traction (32).

5. Un entrepôt vertical tel que revendiqué dans l'une quelconque des revendications 2 à 4, **caractérisé en ce que** ladite glissière (36) est constituée par une surface support (38) pour supporter ledit container (8); ladite glissière (36) étant en engagement avec une dent de référence (34), qui est portée par lesdits seconds moyens de transport (27) qui est dans une direction transversale par rapport à ladite surface support (38), et qui présente une première extrémité (35) s'étendant au delà de la surface support (38) pendant les mouvements de ladite glissière (36), de façon à ce qu'un logement (20) formé dans ledit container (8) s'engage avec celle-ci.

6. Un entrepôt vertical tel que revendiqué dans les revendications 4 et 5, **caractérisé en ce que** ladite dent de référence (34) s'engage dans ladite rainure (45) d'une manière coulissante, et présente une seconde extrémité opposée a ladite première extrémité (35) pivotant autour de ladite goupille de traction (32).

7. Un entrepôt vertical tel que revendiqué dans l'une quelconque des revendications précédentes, **caractérisé en ce que** ladite station d'inspection (22) comprend au moins un carter de protection (28) pour protéger lesdits seconds moyens de transport (27).
